# EUROPÄISCHE PATENTSCHRIFT

(11) **EP 3 851 679 B1**
(45) Veröffentlichungstag und Bekanntmachung des Hinweises auf die Patenterteilung: **09.04.2025**
(21) Anmeldenummer: 21151059.9
(22) Anmeldetag: 12.01.2021
(51) Int. Cl.: F04D 17/16, F04D 25/06, F04D 25/08, F04D 29/58

(54) **VENTILATOR MIT EINEM AUSSENLÄUFERMOTOR UND KÜHLKANAL ZUR KÜHLUNG DER MOTORELEKTRONIK UND VON MOTORANTRIEBSKOMPONENTEN**
FAN WITH AN EXTERNAL ROTOR MOTOR AND COOLING CHANNEL FOR COOLING THE MOTOR ELECTRONICS AND MOTOR DRIVE COMPONENTS
VENTILATEUR DOTÉ D'UN MOTEUR À ROTOR EXTERNE ET CANAL DE REFROIDISSEMENT DESTINÉ AU REFROIDISSEMENT DE L'ÉLECTRONIQUE DE MOTEUR ET DES COMPOSANTS DE L'ENTRAÎNEMENT DE MOTEUR

(30) Priorität: 16.01.2020 DE 102020100865
(43) Veröffentlichungstag der Anmeldung: 21.07.2021
(60) Teilanmeldung: 22152257.6
(73) Patentinhaber: ebm-papst Mulfingen GmbH & Co. KG, 74673 Mulfingen (DE)
(72) Erfinder: HAAG, Christian, 74653 Künzelsau (DE); SCHMIDT, Tobias, 74744 Ahorn-Schillingsstadt (DE); BÜRCKERT, Wolfgang, 97980 Bad Mergentheim (DE)
(74) Vertreter: Staeger & Sperling Partnerschaftsgesellschaft mbB

(56) Entgegenhaltungen:
- WO-A1-02/27895
- WO-A2-2008/146154
- DE-A1- 102010 046 672
- US-A- 6 107 708
- US-A1- 2017 288 507

## Beschreibung

Die Erfindung betrifft einen Ventilator mit einem Außenläufermotor sowie einem Kühlkanal zur Kühlung sowohl der Motorelektronik als auch von Motorantriebskomponenten.

Die Wärmeentwicklung bei Elektromotoren spielt eine entscheidende Rolle bei der abrufbaren Leistung und Lebensdauer. Deshalb werden bereits im Stand der Technik Maßnahmen zur Kühlung der Motorelektronik vorgesehen, insbesondere wird in einer Variante neben dem durch den Außenläufermotor anzutreibenden Ventilatorrad ein Aktivkühlrad am Rotor verbaut, welches während der Rotation des Rotors einen eigenen Kühlluftstrom erzeugt, der aktiv entlang der Motorelektronik vorbeigeführt wird. Wenn Außenläufermotoren bei geringen Drehzahlen eingesetzt werden reicht die Kühlleistung durch das Aktivkühlrad häufig nicht aus, um einen ausreichenden Wärmeabtransport zu gewährleisten. Zudem ist bei Aktivkühlrädern nachteilig, dass sie bei hohen Drehzahlen Geräusche erzeugen, drehrichtungsabhängig sein können und zusätzlichen Drehmomentbedarf aufweisen, welcher den Wirkungsgrad verschlechtert.

Andere Lösungen sehen beispielsweise eine Vergrößerung der Oberfläche der angrenzenden Bauteile oder die Erhöhung des Materialaufwands, d.h. Vergrößerung der Wandstärke des Elektronikgehäuses, um mehr Wärme aufnehmen zu können, vor. Hierdurch steigt jedoch das Gewicht. Alternativ werden Materialien mit höherer Wärmeleitfähigkeit eingesetzt, die jedoch teurer sind.

Neben der Kühlung der Motorelektronik ist auch eine Kühlung von Motorantriebskomponenten, beispielsweise des Rotors, Stators oder der Motorlagerung gewünscht.

Druckschriftlicher Stand der Technik im vorliegenden technischen Gebiet ist beispielsweise in den Dokumenten US 2017/288507 A1, WO 02/27895 A1, WO 2008/146154 A2, DE 10 2010 046 672 A1, US 6,107,708 A offenbart.

Der Erfindung liegt deshalb die Aufgabe zugrunde, einen Ventilator bereit zu stellen, der auch bei geringen Drehzahlen eine verbesserte Kühlung der Gesamtanordnung des Außenläufermotors bezüglich seiner Motorelektronik und Motorantriebskomponenten bei möglichst geringem und kostengünstigem Materialaufwand aufweist. Zudem soll die Geräuschentwicklung vergleichsweise gering sein.

Diese Aufgabe wird durch die Merkmalskombination gemäß Patentanspruch 1 gelöst.

Erfindungsgemäß wird ein Ventilator mit einem Außenläufermotor vorgeschlagen, wobei der Außenläufermotor einen in einem Motorabschnitt um eine Rotationsachse rotierenden Rotor aufweist, der ausgebildet ist zur radial außenseitig umschließenden Aufnahme eines Ventilatorrades. Der Außenläufermotor sieht ferner eine in einem Elektronikabschnitt angeordnete Motorelektronik aufgenommen in einem Elektronikgehäuse vor, wobei der Motorabschnitt und der Elektronikabschnitt entlang der Rotationsachse vorzugsweise axial, alternativ radial, angrenzend zueinander angeordnet sind. Der Ventilator erzeugt über das Ventilatorrad im bestimmungsgemäßen Betrieb einen Druckunterschied zwischen seiner vorzugsweise dem Rotor zugeordneten Saugseite und seiner vorzugsweise der Motorelektronik zugeordneten Druckseite. Innerhalb des Außenläufermotors verläuft ein durchgängiger Kühlkanal von einer druckseitigen Einströmöffnung an dem Elektronikgehäuse entlang der Motorelektronik und zumindest abschnittsweise entlang des Rotors bis zu einer saugseitigen Ausströmöffnung im Motorabschnitt, so dass im Betrieb ein Kühlluftstrom durch den Kühlkanal ausschließlich passiv durch den von dem Ventilatorrad erzeugten Druckunterschied erzeugbar ist, um sowohl den Elektronikabschnitt als auch den Motorabschnitt zu kühlen.

Grundsätzlich gilt, dass die Druckseite und Saugseite von der Strömungsrichtung des Ventilators abhängen. Der Kühlluftstrom erfolgt jedoch stets von der Druckseite zur Saugseite. Die vorstehend beschriebene Einströmöffnung an dem Elektronikgehäuse ist bei einer inversen Strömungsrichtung dann die Ausströmöffnung, die Ausströmöffnung im Motorabschnitt wird dann zur Einströmöffnung.

Im Betrieb des Ventilators saugt das Ventilatorrad auf der Saugseite Luft an, so dass saugseitig ein Unterdruck entsteht, und bläst diese auf der Druckseite aus, wo ein Überdruck entsteht. Hieraus ergibt sich eine Druckdifferenz Δp zwischen der Saugseite und der Druckseite. Durch die Druckdifferenz bildet sich eine Ausgleichsströmung durch den Kühlkanal, welche genutzt wird als passiver Kühlluftstrom. Bei der vorliegenden Lösung wird somit der Kühlluftstrom saugseitig an der Ausströmöffnung angesogen und durch den Kühlkanal gefördert, wobei die Druckdifferenz durch das Ventilatorrad auf der Ansaugseite des Ventilators erzeugt wird. Durch die Ansaugung des Kühlluftstromes auf der Druckseite und die Ausströmung des Kühlluftstromes auf der Saugseite am Rotor erfolgt eine ganzheitliche Kühlung sowohl der Motorelektronik im Elektronikabschnitt als auch der Motorantriebskomponenten im Motorabschnitt, d.h. der Gesamtanordnung des Außenläufermotors mit seinen Motorteilen und seiner Elektronik. Durch die Kühlung kann somit entweder die Leistung gesteigert oder je nach Anwendung sogar ein kleinerer Motor verbaut werden. Das spart Kosten.

Als "passiv" erzeugter Kühlluftstrom durch den Kühlkanal ist vorliegend die Abgrenzung zu einem durch ein im Betrieb rotierendes Aktivkühlrad erzeugten und mithin aktiven Luftstrom definiert. Aktivkühlräder erzeugen Geräusche, insbesondere bei höheren Drehzahlen. Dies kann durch die rein passive Kühlung verhindert werden.

Als Abgrenzung zwischen dem Elektronikabschnitt und dem Motorabschnitt dient ein Axialschnitt, bei dem die am weitesten in Richtung Rotor vorstehenden Komponenten der Motorelektronik enden. Häufig wird die Motorelektronik auch axial auf die Motorantriebskomponenten aufgesetzt. Dann ergibt sich die Trennung durch die beiden Bauteile.

Zur Verbesserung der Kühlleistung sieht eine Ausführungsvariante vor, dass an dem Elektronikgehäuse mehrere Kühlrippen ausgebildet sind, die sich axial und radial ausgehend von der Einströmöffnung in den Kühlkanal erstrecken und eine Kanalwandfläche des Kühlkanals bilden. Die Kühlrippen bilden zudem vorzugsweise die Einströmöffnung an dem Elektronikgehäuse. Die über die Kühlrippen erreichte Oberflächenvergrößerung und die Positionierung unmittelbar an der Einströmöffnung führen zu einer günstigen und effektiven Wärmeabfuhr über den Kühlluftstrom durch den Kühlkanal.

Der Ventilator ist ferner vorzugsweise dadurch gekennzeichnet, dass der Rotor ein Rotorgehäuse, vorzugsweise ausgebildet als Rotorglocke, aufweist und die Ausströmöffnung im Bereich einer axialen Stirnseite des Rotorgehäuses ausgebildet ist. Die Ausströmung erfolgt mithin vorzugsweise axial, kann jedoch auch an der Mantelfläche des Rotorgehäuses oder am Übergang zwischen der axialen Stirnfläche und der Mantelfläche vorgesehen werden und somit eine zumindest teilweise radiale Abströmrichtung aufweisen.

Bei Radialventilatoren sind häufig keine Öffnungen am Rotor bzw. Rotorgehäuse vorgesehen. Deshalb weist das Ventilatorrad für diese Ausführung eine Laufradbodenscheibe mit daran ausgebildeten Laufradschaufeln auf, wobei die Ausströmöffnung in der Laufradbodenscheibe ausgebildet ist. Der Kühlkanal erstreckt sich somit im Motorabschnitt nicht über die gesamte axiale Länge, sondern wird bereits an der Laufradbodenscheibe nach außerhalb des Rotors gleitet.

Erfindungsgemäß weist der Außenläufermotor im Motorabschnitt eine Statorbuchse mit einem Statorpaket und Motorwicklungen sowie in Umfangsrichtung verteilt angeordnete Statorkühlrippen auf, wobei der Kühlkanal auch entlang der Statorkühlrippen verläuft.

Bei der Lösung für Radialventilatoren ist dabei insbesondere vorgesehen, dass die Laufradbodenscheibe axial an die sich axial zur Laufradbodenscheibe erstreckenden Statorkühlrippen angrenzend verläuft, so dass der Kühlluftstrom axial über die Statorkühlrippen zur Ausströmöffnung in der Laufradbodenscheibe führbar ist. Bei dieser Lösung wird auch für Radialventilatoren neben der Kühlung der Motorelektronik im Elektronikabschnitt eine ausreichende Kühlleistung im Motorabschnitt gewährleistet, da die Statorkühlrippen als Motorkomponente im Motorabschnitt angeordnet sind.

Bei den Axialventilatoren und Diagonalventilatoren sieht eine erfindungsgemäße Ausführungsvariante vor, dass der Außenläufermotor im Motorabschnitt eine Statorbuchse mit einem Statorpaket und Motorwicklungen sowie in Umfangsrichtung verteilt angeordnete Statorkühlrippen aufweist, wobei der Kühlluftstrom unmittelbar angrenzend entlang der Statorkühlrippen und entlang dem Statorpaket verläuft. Der Kühlluftstrom kann dabei frei durch den Motorabschnitt den Weg des geringsten Widerstands nehmend strömen oder in einem Kühlkanal an bestimmten Bauteilen entlang geführt werden. Durch die Möglichkeit, die Ausströmöffnung am Rotor bzw. Rotorgehäuse selbst auszubilden, kann der Kühlluftstrom im Inneren des Rotors direkt an den sich im Betrieb erwärmenden Bauteilen entlang geführt werden.

Ein günstiges Ausführungsbeispiel des Ventilators ist dadurch gekennzeichnet, dass der Kühlkanal in einem Übergang von dem Elektronikabschnitt zu dem Motorabschnitt durch eine stehende oder rotierbare Abdeckung geschlossen oder im Wesentlichen geschlossen ist. Im Wesentlichen geschlossen bedeutet, dass keine vollständige Abdichtung vorgesehen ist. Die Abdeckung kann jedoch labyrinthförmig im Sinne einer Labyrinthdichtung ausgebildet sein, um möglichst geringe Leckageverluste hinnehmen zu müssen. Je nachdem, an welchem Bauteil die Abdeckung befestigt wird, beispielsweise dem Elektronikgehäuse oder dem Rotor, steht oder rotiert sie im Betrieb. Die Abdeckung bildet dabei eine Außenmantelfläche des Außenläufermotors.

In eine Weiterbildung des Ventilators sieht vor, dass der Kühlkanal im Verlauf von der Einströmöffnung zur Ausströmöffnung mehrere Richtungsänderungen aufweist, so dass der Kühlluftstrom mehrfach umgelenkt wird. Hierdurch kann die Kühlung entlang der zu kühlenden Bauteile gelenkt und somit die Kühlleistung vergrößert werden.

Die Ausströmöffnung an dem Rotorgehäuse ist gegenüber dem Ventilatorrad axial beabstandet. Dies fördert, dass ein ausreichender Druckunterschied und mithin der Saugeffekt an der Ausströmöffnung gewährleistet ist.

Ferner sieht eine Ausführung des Ventilators vor, dass der Kühlkanal in Umfangsrichtung lokal begrenzt in dem Elektronikabschnitt und dem Motorabschnitt verläuft. Der Platzbedarf für die Kühlung ist hierdurch beschränkt. Der Aufbau des Außenläufermotors bleibt kompakt.

In einer Weiterbildung des Ventilators ist der Rotor über mindestens ein Lager gelagert, wobei der Kühlkanal an dem mindestens einem Lager vorbeigeführt wird. Auch die Lagerung erzeugt im Betrieb Wärme, die vorzugsweise durch den Kühlluftstrom mit abgeführt wird.

Die Offenbarung umfasst zudem eine Ausführung des Ventilators mit einem Außenläufermotor mit einem in einem Motorabschnitt um eine Rotationsachse rotierenden Rotor ausgebildet zur radial außenseitig umschließenden Aufnahme eines Ventilatorrades und mit einer in einem Elektronikabschnitt angeordneten Motorelektronik. Der Motorabschnitt und der Elektronikabschnitt sind entlang der Rotationsachse axial oder gegenüber der Rotationsachse radial angrenzend zueinander angeordnet. Der Außenläufermotor weist im Motorabschnitt eine Statorbuchse mit einem Statorpaket und Motorwicklungen sowie in Umfangsrichtung verteilt angeordnete Statorkühlrippen auf. Der Ventilator erzeugt über das Ventilatorrad im bestimmungsgemäßen Betrieb einen Druckunterschied Δp zwischen seiner Saugseite und seiner Druckseite, wobei innerhalb des Außenläufermotors ein durchgängiger Kühlkanal von einer druckseitigen Einströmöffnung bis zu einer saugseitigen Ausströmöffnung entlang der Statorkühlrippen verläuft. Im Betrieb ist ein Kühlluftstrom durch den Kühlkanal ausschließlich passiv durch den von dem Ventilatorrad erzeugten Druckunterschied (Δp) erzeugbar. Dabei ist vorgesehen, dass zumindest ein Leistungsmodul der Motorelektronik unmittelbar an die die Statorkühlrippen aufweisende Statorbuchse angrenzend angeordnet ist, um den Motorabschnitt und zumindest das Leistungsmodul, aber auch weitere Bauteile der Motorelektronik über die Statorbuchse zu entwärmen bzw. zu kühlen.

Alle vorstehend beschriebenen Merkmale sind unmittelbar auch für diesen Ventilator anwendbar, soweit dies technisch möglich ist. Insbesondere ist der Kühlluftstrom ebenfalls richtungsabhängig von der Strömungsrichtung des Ventilators. Auch sind wieder beide Varianten umfasst, nämlich die Durchströmung durch die Strömungsöffnung in der Laufradbodenscheibe und mithin der Verlauf des Kühlluftstromes außerhalb des Rotorgehäuses (Rotorglocke) oder die Durchströmung der Strömungsöffnung an der Stirnseite der Rotorglocke und mithin der Verlauf des Kühlluftstromes innerhalb der Rotorglocke entlang der Motorbauteile wie beispielsweise den Statorwicklungen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Ansicht zum durch den Ventilator erzeugten Druckunterschied,
- Fig. 2: ein erstes Ausführungsbeispiel des Außenläufermotors in einer Ausführung für einen Axial-, Radial- und Diagonalventilator,
- Fig. 3: ein Ausführungsbeispiel des Ventilators in einer Ausführung als Axialventilator,
- Fig. 4: ein Ausführungsbeispiel des Ventilators in einer Ausführung als Radialventilator,
- Fig. 5: ein alternatives Ausführungsbeispiel des Ventilators in einer ersten Variante, das nicht Teil der Erfindung ist,
- Fig. 6: das Ausführungsbeispiel des Ventilators gemäß Figur 5 in einer weiteren Variante, das nicht Teil der Erfindung ist.

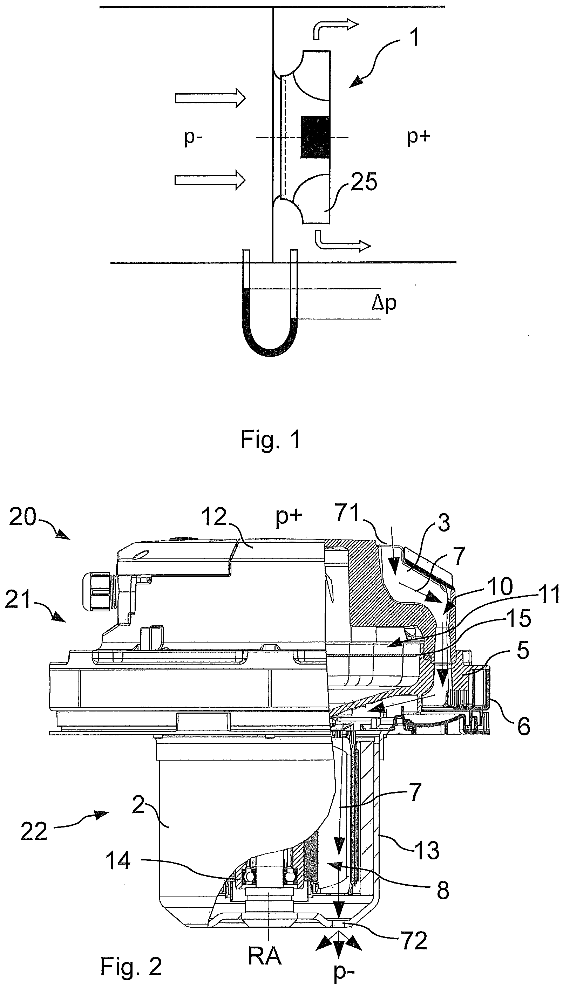

In Figur 1 ist beispielhaft schematisch der von einem Ventilator 1 durch das Ventilatorrad 25 im Betrieb erzeugt Druckunterschied Δp sowie der ansaugseitige Unterdruck p- und druckseitige, d. h. ausströmseitige Überdruck p+ dargestellt. Vorliegend wird der Unterdruck p- genutzt, um eine Ansaugung eines Kühlluftstroms zu erzeugen, der als Ausgleichsströmung entgegen der Hauptströmungsrichtung des durch das Ventilatorrad 25 erzeugten Luftstromes läuft.

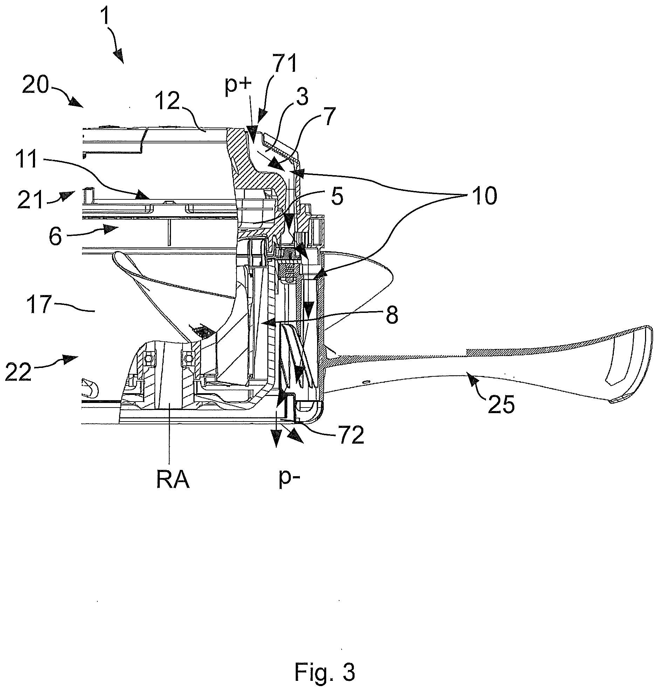

Figur 2 zeigt ein erstes Ausführungsbeispiel eines teilweise aufgeschnittenen Außenläufermotors 20 des Ventilators 1 in einer Ausführung als Axialventilator. Die Gesamtanordnung des Außenläufermotors 20 ist axial unterteilt in den Elektronikabschnitt 21 und den unmittelbar axial angrenzenden Motorabschnitt 22. Im Elektronikabschnitt 21 ist die Motorelektronik 11 in dem deckelförmigen Elektronikgehäuse 12 aufgenommen, im Motorabschnitt 22 sind die für den Antrieb des Ventilatorrads 25 (hier nicht gezeigt, jedoch auf den Rotor 2 in einer Weise aufgesetzt, wie in Figur 3 dargestellt) zuständigen Motorantriebskomponenten angeordnet, insbesondere der zylindrische Rotor 2 mit seinem topfförmigen Rotorgehäuse 13 (Rotorglocke) und den darin aufgenommenen Statorpaket 8 mit Motorwicklungen. Auch zu erkennen ist die Lagerung 14 der Motorwelle.

An dem Elektronikgehäuse 12 ist stirnseitig die Einströmöffnung 71 für den Kühlluftstrom 7 vorgesehen, wobei sich ausgehend von der Einströmöffnung axial und radial erstreckende Kühlrippen 3 vorgesehen sind und abschnittsweise Kanalwandflächen des Kühlkanals 10 bestimmen. Der Kühlkanal 10 ist durchgängig und verläuft im radial äußeren Teil des Außenläufermotors, wird im Anschluss an die Einströmöffnung 71 nach radial außen umgelenkt vorbei an den auf einer Leiterplatte 15 angeordneten Elektronikbauteilen, welche die Motorelektronik 11 bestimmen, und wieder nach radial innen umgelenkt zu dem Rotor 2. Im Bereich des Rotors 2 verläuft der Kühlkanal 10 axial geradlinig innerhalb des Rotorgehäuses 13 unmittelbar entlang dem Statorpaket 8 und dem Lager 14 bis zur axial stirnseitigen Ausströmöffnung 72. Im Bereich des Rotors 2 ist der Kühlkanal in der gezeigten Ausführung nicht speziell bewandet, so dass der Kühlluftstrom frei entlang dem Weg des geringsten Widerstands entlang der Motorkomponenten zur Ausströmöffnung 72 strömen kann. Es kann jedoch alternativ ein Kühlkanal mit spezieller Führung entlang bestimmter Bauteile vorgesehen werden, der durch festgelegte Begrenzungen, beispielsweise die Innenwandfläche des Rotorgehäuses, als geschlossener Kanal gebildet wird.

Im an den Elektronikabschnitt 21 angrenzenden Bereich erstrecken sich im Motorabschnitt 22 in Umfangsrichtung verteilt angeordnete Statorkühlrippen 5 in Richtung des Rotors 2. Der Kühlkanal 10 verläuft an den Statorkühlrippen 5 vorbei, so dass der Kühlluftstrom 7 die von den Statorkühlrippen 5 aufgenommene Wärme abtransportiert. Der Übergang zum Rotor 2 ist durch die Abdeckung 6 geschlossen, die am Elektronikgehäuse 12 befestigt ist und eine labyrinthdichtungsartige Ausbildung aufweist, um den Druckverlust zu minimieren. Die Abdeckung 6 bildet abschnittsweise sowohl eine Kanalwandfläche des Kühlkanals 10 als auch eine äußere Mantelfläche des Außenläufermotors 20. Im Betrieb wird der Kühlluftstrom 7 an der saugseitigen Ausströmöffnung 72 im Motorabschnitt 22 angesaugt, so dass er druckseitig in die Einströmöffnung 71 und durch die Gesamtanordnung des Außenläufermotors 20 hindurch bis zur Ausströmöffnung 72 strömt. Da der Kühlluftstrom 7 ausschließlich durch den Druckunterschied zwischen der Saugseite und der Druckseite erzeugt wird, wird er vorliegend als passiv bezeichnet.

In Figur 3 ist ein Ausführungsbeispiel des Ventilators 1 in einer alternativen Ausführung als Axialventilator in einer Seitenansicht dargestellt. Die zum Außenläufer 20 aus Figur 1 beschriebenen Merkmale liegen hier ebenfalls vor, soweit nicht anders erläutert. An dem Rotor 2 ist das Ventilatorrad 25 mit seiner Laufradnabe das Rotorgehäuse 13 vollständig umschließend befestigt. Das Ventilatorrad 25 erzeugt im Betrieb neben der Hauptströmung auch den für den Kühlluftstrom 7 genutzten Druckunterschied Δp. Die Ausströmöffnung 72 in dieser Ausführung jedoch nicht am Rotorgehäuse 13, sondern am Ventilatorrad 25 bzw. der Laufradnabe vorgesehen. Der Kühlluftstrom 7 verläuft im Motorabschnitt 22 radial zwischen dem Rotorgehäuse 13 und der Laufradnabe 17 des Ventilatorrads 25, so dass der Kühlkanal 10 im Motorabschnitt 22 durch das Rotorgehäuse 13 und die Laufradnabe des Ventilatorrads 25 gebildet ist.

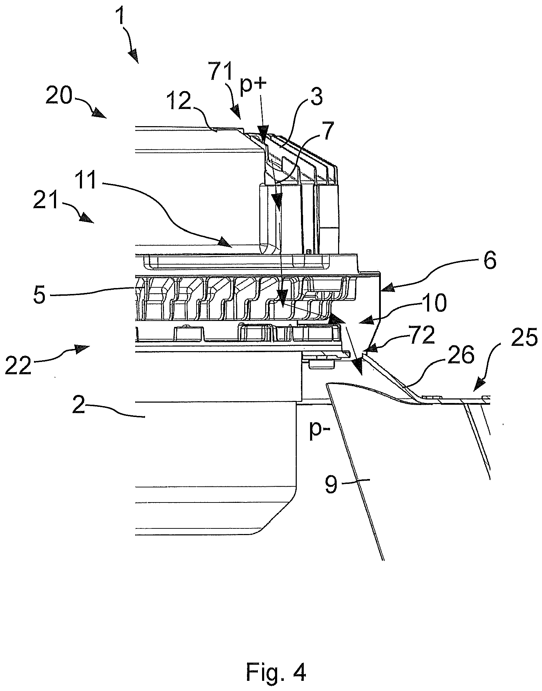

In Figur 4 ist ein Ausführungsbeispiel des Ventilators 1 in einer Ausführung als Radialventilator dargestellt, wobei der Kühlkanal 10 im Unterschied zu den vorherigen Beispielen nicht entlang des gesamten Rotors 2 geführt wird. Das Ventilatorrad 25 des Radialventilators weist in seiner Laufradbodenscheibe 26 die Ausströmöffnung 72 auf. Die Laufradbodenscheibe 26 trägt die Laufradschaufeln 9, welche in der vorliegenden Ausführung rückwärtsgekrümmt sind. Der Kühlkanal 10 verläuft mithin von der Einströmöffnung 71 im Elektronikgehäuse 12 entlang der Kühlrippen 3 zum Motorabschnitt 22 und darin entlang der Statorkühlrippen 5 nach radial außen zur Ausströmöffnung 72 an der Laufradbodenscheibe 26. Der Kühlluftstrom 7 wird dann durch das Ventilatorrad 25 nach radial außen weg gefördert. Die Kühlung im Elektronikabschnitt 21 ist identisch zu den vorherigen Ausführungsbeispielen. Im Motorabschnitt 22 erfolgt die Kühlung hauptsächlich über die Statorkühlrippen 5.

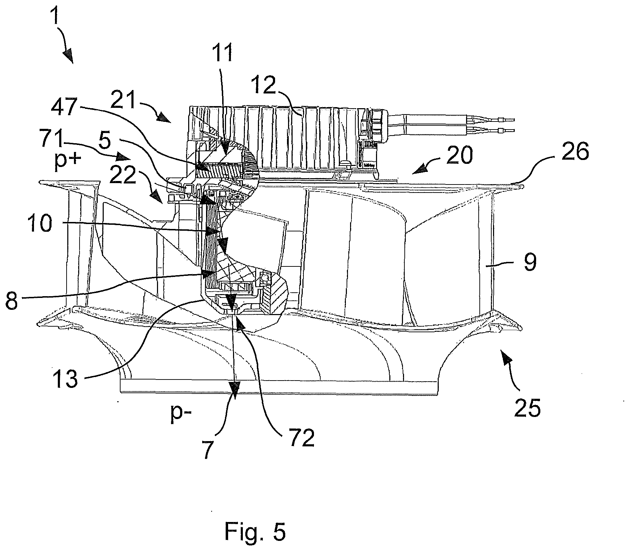

In Figur 5 ist eine Alternative Ausführung des Ventilators 1 in einer Ausführung als Radialventilator mit dem Außenläufermotor 20 dargestellt, der wie in den vorigen Ausführungsbeispielen den Motorabschnitt 22 und den entlang der Rotationsachse RA axial angrenzenden Elektronikabschnitt 21 mit der darin angeordneten Motorelektronik 11 umfasst. Alle zu den vorstehenden Ausführungen beschriebenen identischen Merkmale werden nicht nochmals wiederholt, gelten jedoch auch für das Ausführungsbeispiel nach Figur 5. In einer nicht gezeigten alternativen Ausführung kann der Elektronikabschnitt auch radial zur Rotationsachse RA ausgerichtet sein. Am Rotor 2 ist radial außenseitig das Ventilatorrad 25 aufgenommen. Der Ventilator 1 erzeugt über das Ventilatorrad 25 einen Druckunterschied Δp zwischen seiner Saugseite und seiner Druckseite. Innerhalb des Außenläufermotors 20 verläuft der durchgängige Kühlkanal 10 von der druckseitigen Einströmöffnung 71 bis zu der saugseitigen Ausströmöffnung 72 entlang der Statorkühlrippen 5, wobei im Betrieb der durch Pfeile dargestellte Kühlluftstrom 7 durch den Kühlkanal 10 ausschließlich passiv durch den von dem Ventilatorrad 25 erzeugten Druckunterschied Δp erzeugt wird.

Das Leistungsmodul 47 der Motorelektronik 11 erzeugt die meiste Wärme und ist deshalb unmittelbar an die die Statorkühlrippen 5 aufweisende Statorbuchse angrenzend angeordnet, um den Motorabschnitt 22 und das Leistungsmodul 47 der Motorelektronik 11 über die Statorbuchse zu kühlen.

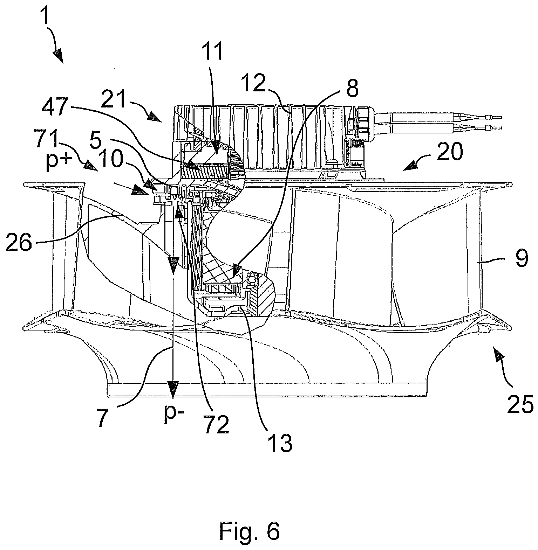

In Figur 6 ist ein weiteres Ausführungsbeispiel des Ventilators 1 dargestellt, wobei der Aufbau bis auf die folgenden Unterschiede demjenigen aus Figur 5 entspricht. Der Kühlluftstrom 7 beliebt wie bei der Ausführung gemäß Figur 4 außerhalb des Rotors 2. Auch in dieser Ausführung weist das Ventilatorrad 25 des Ventilators in seiner die rückwärtsgekrümmten Laufradschaufeln 9 tragenden Laufradbodenscheibe 26 die Ausströmöffnung 72 auf. Der Kühlkanal 10 verläuft von radial außen entlang der Statorkühlrippen 5 zur Ausströmöffnung 72 an der Laufradbodenscheibe 26. Der Kühlluftstrom 7 wird anschließend durch das Ventilatorrad 25 nach radial außen gefördert. Der Ventilator 1 erzeugt wie bei der Ausführung gemäß Figur 5 über das Ventilatorrad 25 den Druckunterschied Δp zwischen seiner Saugseite und seiner Druckseite. Im Betrieb wird der durch Pfeile dargestellte Kühlluftstrom 7 durch den Kühlkanal 10 ausschließlich passiv durch den von dem Ventilatorrad 25 erzeugten Druckunterschied Δp erzeugt. Das Leistungsmodul 47 der Motorelektronik 11 ist auch bei dieser Ausführung unmittelbar an die die Statorkühlrippen 5 aufweisende Statorbuchse angrenzend angeordnet, um den Motorabschnitt 22 und das Leistungsmodul 47 der Motorelektronik 11 unmittelbar über die Statorbuchse zu kühlen. Auch bei dem Ventilator 1 gemäß Figur 6 kann der Elektronikabschnitt anstelle axial auch radial zur Rotationsachse RA ausgerichtet bzw. positioniert sein.

## Patentansprüche

1. Ventilator mit einem Außenläufermotor (20) umfassend einen in einem Motorabschnitt (22) um eine Rotationsachse (RA) rotierenden Rotor (2) ausgebildet zur radial außenseitig umschließenden Aufnahme eines Ventilatorrades (25), und eine in einem Elektronikabschnitt (21) angeordnete Motorelektronik (11) aufgenommen in einem Elektronikgehäuse (12), wobei der Motorabschnitt (22) und der Elektronikabschnitt (21) entlang der Rotationsachse (RA) axial oder radial angrenzend zueinander angeordnet sind, wobei der Ventilator (1) über das Ventilatorrad (25) im bestimmungsgemäßen Betrieb einen Druckunterschied (Δp) zwischen seiner Saugseite und seiner Druckseite erzeugt, wobei innerhalb des Außenläufermotors (20) ein durchgängiger Kühlkanal (10) von einer Strömungsöffnung an dem Elektronikgehäuse (12) entlang der Motorelektronik (11) und zumindest abschnittsweise entlang des Rotors (2) bis zu einer Strömungsöffnung im Motorabschnitt (22) verläuft und im Betrieb ein Kühlluftstrom (7) durch den Kühlkanal (10) ausschließlich passiv durch den von dem Ventilatorrad (25) erzeugten Druckunterschied (Δp) erzeugbar ist, um sowohl den Elektronikabschnitt (21) als auch den Motorabschnitt (22) zu kühlen, **dadurch gekennzeichnet, dass** der Außenläufermotor (20) im Motorabschnitt (22) eine Statorbuchse mit einem Statorpaket (8) und Motorwicklungen sowie in Umfangsrichtung verteilt angeordnete Statorkühlrippen (5) aufweist, wobei der Kühlkanal (10) entweder entlang der Statorkühlrippen (5) oder entlang der Statorkühlrippen (5) und entlang dem Statorpaket (8) verläuft.

2. Ventilator nach Anspruch 1, **dadurch gekennzeichnet, dass** die Strömungsöffnung an dem Elektronikgehäuse eine druckseitige Einströmöffnung (71) und die Strömungsöffnung im Motorabschnitt (22) eine saugseitige Ausströmöffnung (72) bestimmen.

3. Ventilator nach Anspruch 2, **dadurch gekennzeichnet, dass** an dem Elektronikgehäuse (12) mehrere Kühlrippen (3) ausgebildet sind, die sich axial und radial ausgehend von der Einströmöffnung (71) in den Kühlkanal (10) erstrecken und eine Kanalwandfläche des Kühlkanals (10) bilden.

4. Ventilator nach Anspruch 2 oder 3, **dadurch gekennzeichnet, dass** der Rotor (2) ein Rotorgehäuse (13) aufweist und die Ausströmöffnung (72) im Bereich einer axialen Stirnseite des Rotorgehäuses (13) ausgebildet ist.

5. Ventilator nach Anspruch 2 oder 3, **dadurch gekennzeichnet, dass** das Ventilatorrad (25) eine Laufradbodenscheibe (26) mit daran ausgebildeten Laufradschaufeln (9) aufweist, in der die Ausströmöffnung (72) ausgebildet ist.

6. Ventilator nach dem vorigen Anspruch, **dadurch gekennzeichnet, dass** die Laufradbodenscheibe (26) axial an die sich axial zur Laufradbodenscheibe (26) erstreckenden Statorkühlrippen (5) angrenzend verläuft, so dass der Kühlluftstrom (7) axial über die Statorkühlrippen (5) zur Ausströmöffnung (72) in der Laufradbodenscheibe (26) führbar ist.

7. Ventilator nach einem der vorigen Ansprüche, **dadurch gekennzeichnet, dass** der Kühlkanal (10) in einem Übergang von dem Elektronikabschnitt (21) zu dem Motorabschnitt (22) durch eine stehende oder rotierbare unbeschaufelte Abdeckung (6) geschlossen oder im Wesentlichen geschlossen ist.

8. Ventilator nach einem der vorigen Ansprüche, **dadurch gekennzeichnet, dass** der Kühlkanal (10) im Verlauf von der Einströmöffnung (71) zur Ausströmöffnung (72) mehrere Richtungsänderungen aufweist, so dass der Kühlluftstrom (7) mehrfach umgelenkt wird.

9. Ventilator nach einem der vorigen Ansprüche, **dadurch gekennzeichnet, dass** die Ausströmöffnung (72) an dem Rotor (2) gegenüber dem Ventilatorrad (25) axial beabstandet ist.

10. Ventilator nach einem der vorigen Ansprüche, **dadurch gekennzeichnet, dass** der Kühlkanal (10) in Umfangsrichtung lokal begrenzt in dem Elektronikabschnitt (21) und dem Motorabschnitt (22) verläuft.

11. Ventilator nach einem der vorigen Ansprüche, **dadurch gekennzeichnet, dass** der Rotor (2) über mindestens ein Lager (14) gelagert ist und der Kühlkanal (10) an dem mindestens einem Lager (14) vorbeiführt.

12. Ventilator nach einem der vorigen Ansprüche, **dadurch gekennzeichnet, dass** der Rotor (2) der Saugseite und die Motorelektronik (11) der Druckseite zugeordnet sind.

## Claims

1. A fan with an external rotor motor (20), comprising a rotor (2) rotating about an axis of rotation (RA) in a motor section (22), configured to receive a fan wheel (25) in a radially outwardly enclosing manner, and motor electronics (11) arranged in an electronics section (21), received in an electronics housing (12), the motor section (22) and the electronics section (21) being arranged axially or radially adjacent to one another along the axis of rotation (RA), the fan (1) producing a differential pressure (Δp) between a suction side and a pressure side via the fan wheel (25) when operated as intended, a continuous cooling channel (10) runs within the external rotor motor (20) from a flow opening at the electronics housing (12) along the motor electronics (11) and at least partially along the rotor (2) to a flow opening in the motor section (22), and a cooling air flow (7) through the cooling channel (10) being producible purely passively by the differential pressure (Δp) produced by the fan wheel (25) during operation to cool both the electronics section (21) and the motor section (22), **characterized in that** the external rotor motor (20) in the motor section (22) has a stator bushing with a laminated stator core (8) and motor windings as well as stator cooling fins (5) arranged in the circumferential direction in a distributed manner, the cooling channel (10) running either along the stator cooling fins (5) or along the stator cooling fins (5) and along the laminated stator core (8).

2. The fan according to claim 1, **characterized in that** the flow opening at the electronics housing defines a pressure-side inflow opening (71), and the flow opening in the motor section (22) defines a suction-side outflow opening (72).

3. The fan according to claim 2, **characterized in that** multiple cooling fins (3) are formed on the electronics housing (12), extending axially and radially starting from the inflow opening (71) into the cooling channel (10) and form a channel wall surface of the cooling channel (10).

4. The fan according to claim 2 or 3, **characterized in that** the rotor (2) has a rotor housing (13), and the outflow opening (72) is formed in the area of an axial end face of the rotor housing (13).

5. The fan according to claim 2 or 3, **characterized in that** the fan wheel (25) has an impeller bottom disk (26) with impeller blades (9) formed thereon, in which the outflow opening (72) is formed.

6. The fan according to the previous claim, **characterized in that** the impeller bottom disk (26) runs axially adjacent to the stator cooling fins (5) extending axially to the impeller bottom disk (26), so that the cooling air flow (7) is axially guidable across the stator cooling fins (5) to the outflow opening (72) in the impeller bottom disk (26).

7. The fan according to any one of the previous claims, **characterized in that** the cooling channel (10) is closed or substantially closed by a stationary or rotatable bladeless cover (6) at a junction from the electronics section (21) to the motor section (22).

8. The fan according to any one of the previous claims, **characterized in that** the cooling channel (10) exhibits multiple changes in direction on the way from the inflow opening (71) to the outflow opening (72), so that the cooling air flow (7) is deflected multiple times.

9. The fan according to any one of the previous claims, **characterized in that** the outflow opening (72) at the rotor (2) is axially spaced apart from the fan wheel (25).

10. The fan according to any one of the previous claims, **characterized in that** the cooling channel (10) runs in a locally confined manner in the electronics section (21) and the motor section (22).

11. The fan according to any one of the previous claims, **characterized in that** the rotor (2) is supported by at least one bearing (14), and the cooling channel (10) is guided past the at least one bearing (14).

12. The fan according to any one of the previous claims, **characterized in that** the rotor (2) is associated with the suction side, and the motor electronics (11) is associated with the pressure side.

## Revendications

1. Ventilateur doté d'un moteur à rotor externe (20), comprenant un rotor (2) tournant autour d'un axe de rotation (RA) dans une section de moteur (22) et réalisé pour recevoir et entourer radialement côté extérieur une première roue de ventilateur (25), et une électronique de moteur (11) disposée dans une section d'électronique (21) et reçue dans un boîtier d'électronique (12), dans lequel la section de moteur (22) et la section d'électronique (21) sont disposées de manière axialement ou radialement adjacente l'une à l'autre le long de l'axe de rotation (RA), dans lequel le ventilateur (1) génère par l'intermédiaire de la roue de ventilateur (25) en cours de fonctionnement correct une différence de pression (Δp) entre son côté admission et son côté refoulement, dans lequel, à l'intérieur du moteur à rotor externe (20), un canal de refroidissement continu (10) s'étend d'une ouverture d'écoulement sur le boîtier d'électronique (12) le long de l'électronique de moteur (11) et au moins par endroits le long du rotor (2) jusqu'à une ouverture d'écoulement dans la section de moteur (22), et en cours de fonctionnement, un flux d'air de refroidissement (7) à travers le canal de refroidissement (10) peut être généré de manière exclusivement passive par la différence de pression (Δp) générée par la roue de ventilateur (25) afin de refroidir à la fois la section d'électronique (21) et la section de moteur (22), **caractérisé en ce que** le moteur à rotor externe (20) présente dans la section de moteur (22) une douille de stator dotée d'un paquet de stator (8) et d'enroulements de moteur ainsi que d'ailettes de refroidissement de stator (5) réparties dans la direction circonférentielle, dans lequel le canal de refroidissement (10) s'étend soit le long des ailettes de refroidissement de stator (5), soit le long des ailettes de refroidissement de stator (5) et le long du paquet de stator (8).

2. Ventilateur selon la revendication 1, **caractérisé en ce que** l'ouverture d'écoulement sur le boîtier d'électronique détermine une ouverture d'entrée côté refoulement (71), et l'ouverture d'écoulement dans la section de moteur (22) détermine une ouverture de sortie côté admission (72).

3. Ventilateur selon la revendication 2, **caractérisé en ce que** plusieurs ailettes de refroidissement (3) sont réalisées sur le boîtier d'électronique (12) qui s'étendent axialement et radialement de l'ouverture d'entrée (71) au canal de refroidissement (10) et forment une surface de paroi de canal du canal de refroidissement (10).

4. Ventilateur selon la revendication 2 ou 3, **caractérisé en ce que** le rotor (2) présente un boîtier de rotor (13), et l'ouverture de sortie (72) est réalisée dans la zone d'une face frontale axiale du boîtier de rotor (13).

5. Ventilateur selon la revendication 2 ou 3, **caractérisé en ce que** la roue de ventilateur (25) présente un disque de fond de roue mobile (26) doté d'aubes de roue mobile (9) réalisées sur celui-ci et dans lequel est réalisée l'ouverture de sortie (72).

6. Ventilateur selon la revendication précédente, **caractérisé en ce que** le disque de fond de roue mobile (26) s'étend axialement de manière adjacente aux ailettes de refroidissement de stator (5) s'étendant axialement au disque de fond de roue mobile (26) de sorte que le flux d'air de refroidissement (7) peut être acheminé axialement par l'intermédiaire des ailettes de refroidissement de stator (5) jusqu'à l'ouverture de sortie (72) dans le disque de fond de roue mobile (26).

7. Ventilateur selon l'une quelconque des revendications précédentes, **caractérisé en ce que** le canal de refroidissement (10) est fermé ou substantiellement fermé dans un passage de la section d'électronique (21) à la section de moteur (22) par un recouvrement (6) fixe ou rotatif sans aubes.

8. Ventilateur selon l'une quelconque des revendications précédentes, **caractérisé en ce que** le canal de refroidissement (10) présente plusieurs changements de direction sur le trajet de l'ouverture d'entrée (71) à l'ouverture de sortie (72) de sorte que le flux d'air de refroidissement (7) est dévié plusieurs fois.

9. Ventilateur selon l'une quelconque des revendications précédentes, **caractérisé en ce que** l'ouverture de sortie (72) sur le rotor (2) est axialement espacée par rapport à la roue de ventilateur (25).

10. Ventilateur selon l'une quelconque des revendications précédentes, **caractérisé en ce que** le canal de refroidissement (10) s'étend dans la direction circonférentielle de manière localement limitée dans la section d'électronique (21) et la section de moteur (22).

11. Ventilateur selon l'une quelconque des revendications précédentes, **caractérisé en ce que** le rotor (2) est monté par l'intermédiaire d'au moins un palier (14) et le canal de refroidissement (10) passe devant ledit au moins un palier (14).

12. Ventilateur selon l'une quelconque des revendications précédentes, **caractérisé en ce que** le rotor (2) est associé au côté admission, et l'électronique de moteur (11) est associée au côté refoulement.
